# EUROPEAN PATENT APPLICATION

(11) **EP 4 645 094 A1**
(43) Date of publication of application: **05.11.2025**
(21) Application number: 22969975.6
(22) Date of filing: 26.12.2022
(51) Int. Cl.: G06F 11/30

(54) **DETERMINATION OF WHETHER PROCESSES INVOLVED IN COMMUNICATION SYSTEM ARE UNSTABLE**

(71) Applicant: Rakuten Mobile, Inc., Tokyo 158-0094 (JP)
(72) Inventor: KITA, Shinya, Tokyo 158-0094 (JP)
(74) Representative: Betten & Resch
(86) International application number: PCT/JP2022/048031
(87) International publication number: WO 2024/142181

(57) **Abstract**

It is enabled that an unstable process is extracted from among processes included in a communication system with a small processing load. A policy manager (90) monitors whether an application which is included in a communication system and which includes processes that are dispersedly operating on a plurality of virtual machines has become unstable. The policy manager (90) determines, in response to detecting that the application has become unstable, for each of the plurality of virtual machines on which at least one process included in the application is operating, whether the process operating on the virtual machine is unstable.

## Description

### Technical Field

The present invention relates to determining whether or not a process included in a communication system is unstable.

### Background Art

In Patent Literature 1, there is described network functions virtualization (NFV) which uses software to implement functions of network devices, for example, with a virtual machine (VM) mounted on a virtualization layer such as a hypervisor.

### Citation List

### Patent Literature

[Patent Literature 1] WO 2020/145242 A1

### Summary of Invention

### Technical Problem

Some applications, for example, a network function, which operate in a communication system include a plurality of processes, and those processes are dispersedly operating on a plurality of virtual machines.

In the extraction of an unstable process from those processes, when each process is monitored to see whether or not the process has become unstable, the processing load for the monitoring can become enormous.

The present invention has been made in view of the above-mentioned circumstance, and has an object to enable an unstable process to be extracted from among processes included in a communication system with a small processing load.

### Solution to Problem

In order to solve the above-mentioned issue, according to one embodiment of the present disclosure, there is provided a determination system including: application monitoring means for monitoring whether an application which is included in a communication system and which includes processes that are dispersedly operating on a plurality of virtual machines has become unstable; and process instability determination means for determining, in response to detecting that the application has become unstable, for each of the plurality of virtual machines on which at least one process included in the application is operating, whether the at least one process operating on the each of the plurality of virtual machines is unstable.

Further, according to one embodiment of the present disclosure, there is provided a determination method including: monitoring whether an application which is included in a communication system and which includes processes that are dispersedly operating on a plurality of virtual machines has become unstable; and determining, in response to detecting that the application has become unstable, for each of the plurality of virtual machines on which at least one process included in the application is operating, whether the at least one process operating on the each of the plurality of virtual machines is unstable.

### Brief Description of Drawings

FIG. 1 is a diagram for illustrating an example of a communication system in one embodiment of the present invention.
FIG. 2 is a diagram for illustrating an example of the communication system in the one embodiment of the present invention.
FIG. 3 is a diagram for schematically illustrating an example of a network service in the one embodiment of the present invention.
FIG. 4 is a diagram for illustrating an example of links between elements constructed in the communication system in the one embodiment of the present invention.
FIG. 5 is a functional block diagram for illustrating an example of functions implemented by a platform system in the one embodiment of the present invention.
FIG. 6 is a diagram for illustrating an example of data structure of physical inventory data.
FIG. 7 is a diagram for schematically illustrating an example of a situation in which processes included in each of a plurality of applications are dispersedly operating on a plurality of virtual machines.
FIG. 8 is a diagram for schematically illustrating an example of a situation in which processes included in each of a plurality of applications are dispersedly operating on a plurality of virtual machines.
FIG. 9 is a diagram for schematically illustrating an example of a situation in which processes included in each of a plurality of applications are dispersedly operating on a plurality of virtual machines.
FIG. 10A is a flow chart for illustrating an example of a flow of a process performed by the platform system in the one embodiment of the present invention.
FIG. 10B is a flow chart for illustrating the example of the flow of the process performed by the platform system in the one embodiment of the present invention.

### Description of Embodiments

One embodiment of the present invention is now described in detail with reference to the drawings.

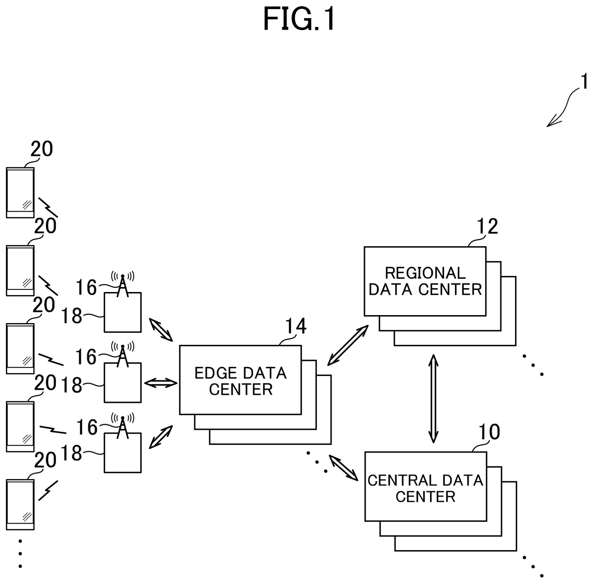

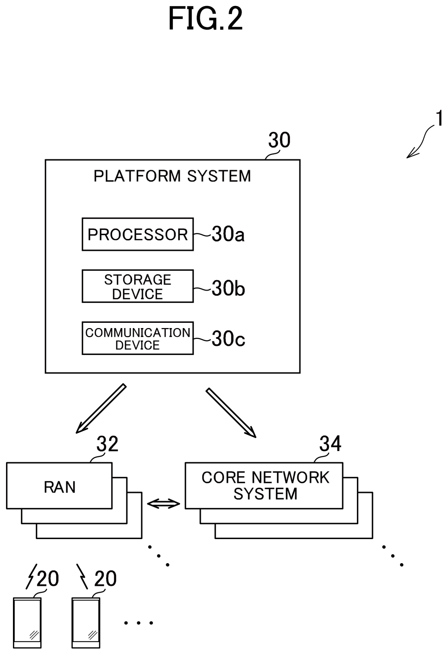

FIG. 1 and FIG. 2 are each a diagram for illustrating an example of a communication system 1 in the one embodiment of the present invention. FIG. 1 is an illustration drawn with attention being given to locations of a data center group included in the communication system 1. FIG. 2 is an illustration drawn with attention being given to various computer systems implemented in the data center group included in the communication system 1.

As illustrated in FIG. 1, the data center group included in the communication system 1 is classified into central data centers 10, regional data centers 12, and edge data centers 14.

For example, several central data centers 10 are dispersedly arranged in an area (for example, in Japan) covered by the communication system 1.

For example, tens of regional data centers 12 are dispersedly arranged in the area covered by the communication system 1. For example, when the area covered by the communication system 1 is the entire area of Japan, one or two regional data centers 12 may be arranged in each prefecture.

For example, thousands of edge data centers 14 are dispersedly arranged in the area covered by the communication system 1. In addition, each of the edge data centers 14 can communicate to and from a communication facility 18 provided with an antenna 16. In this case, as illustrated in FIG. 1, one edge data center 14 may be capable of communicating to and from several communication facilities 18. The communication facility 18 may include a computer such as a server computer. The communication facility 18 in this embodiment performs radio communication to and from a user equipment (UE) 20 via the antenna 16. The communication facility 18 provided with the antenna 16 is provided with, for example, a radio unit (RU), which is described later.

A plurality of servers are arranged in each of the central data centers 10, the regional data centers 12, and the edge data centers 14 in this embodiment.

In this embodiment, for example, the central data centers 10, the regional data centers 12, and the edge data centers 14 can communicate to and from one another. Communication can also be performed between the central data centers 10, between the regional data centers 12, and between the edge data centers 14.

As illustrated in FIG. 2, the communication system 1 in this embodiment includes a platform system 30, a plurality of radio access networks (RANs) 32, a plurality of core network systems 34, and a plurality of UEs 20. The core network system 34, the RAN 32, and the UE 20 cooperate with each other to implement a mobile communication network.

The RAN 32 is a computer system, which is provided with the antenna 16, and corresponds to an eNodeB (eNB) in a fourth generation mobile communication system (hereinafter referred to as "4G") and an NR base station (gNB) in a fifth generation mobile communication system (hereinafter referred to as "5G"). The RANs 32 in this embodiment are implemented mainly by server groups arranged in the edge data centers 14 and the communication facilities 18. A part of the RAN 32 (for example, distributed unit (DU) or central unit (CU) or virtual distributed unit (vDU) or virtual central unit (vCU)) may be implemented by the central data center 10 or the regional data center 12 instead of the edge data center 14.

The core network system 34 is a system corresponding to an evolved packet core (EPC) in 4G or a 5G core (5GC) in 5G. The core network systems 34 in this embodiment are implemented mainly by server groups arranged in the central data centers 10 or the regional data centers 12.

The platform system 30 in this embodiment is configured, for example, on a cloud platform and includes a processor 30a, a storage device 30b, and a communication device 30c, as illustrated in FIG. 2. The processor 30a is a program control device such as a microprocessor which operates in accordance with a program installed in the platform system 30. The storage device 30b is, for example, a storage element such as a ROM or RAM, a solid state drive (SSD), a hard disk drive (HDD), or the like. The storage device 30b stores a program to be executed by the processor 30a, and the like. The communication device 30c is, for example, a communication interface such as a network interface controller (NIC) or a wireless local area network (LAN) module. Software-defined networking (SDN) may be implemented in the communication device 30c. The communication device 30c exchanges data with the RAN 32 and the core network system 34.

In this embodiment, the platform system 30 is implemented by a server group arranged in the central data center 10. The platform system 30 may be implemented by a server group arranged in the regional data center 12.

In this embodiment, for example, in response to a purchase request for a network service (NS) by a purchaser, the network service for which the purchase request has been made is constructed in the RAN 32 or the core network system 34. Then, the constructed network service is provided to the purchaser.

For example, a network service, such as a voice communication service, a data communication service, or the like, is provided to the purchaser who is a mobile virtual network operator (MVNO). The voice communication service or the data communication service provided in this embodiment is eventually provided to a customer (end user) for the purchaser (MVNO in the above-mentioned example), who uses the UE 20 illustrated in FIG. 1 and FIG. 2. The end user can perform voice communication or data communication to and from other users via the RAN 32 or the core network system 34. The UE 20 of the end user can also access a data network such as the Internet via the RAN 32 or the core network system 34.

In addition, in this embodiment, an Internet of things (IoT) service may be provided to an end user who uses a robot arm, a connected car, or the like. In this case, an end user who uses, for example, a robot arm, a connected car, or the like may be a purchaser of the network service in this embodiment.

In this embodiment, host-type virtualization software which operates on a hypervisor (bare metal hypervisor) or a host operating system (host OS) is installed in a server arranged in the central data center 10, the regional data center 12, or the edge data center 14. Further, one or more virtual machines (VM) operate on each server. In addition, one or a plurality of processes can be deployed to operate on each virtual machine. Further, in this embodiment, a cluster of virtual machines may be constructed across a plurality of servers.

The network service provided to the purchaser in this embodiment is formed of one or a plurality of functional units (for example, network function (NF)). In this embodiment, the functional unit is implemented by the NF implemented by the virtualization technology. The NF implemented by the virtualization technology is called "virtualized network function (VNF)." In the following description, it is assumed that the functional unit is implemented by a VNF implemented by a hypervisor-type or host-type virtualization technology. This embodiment is described on the assumption that the network service is implemented by one or a plurality of NFs. The functional unit in this embodiment may also correspond to a network node.

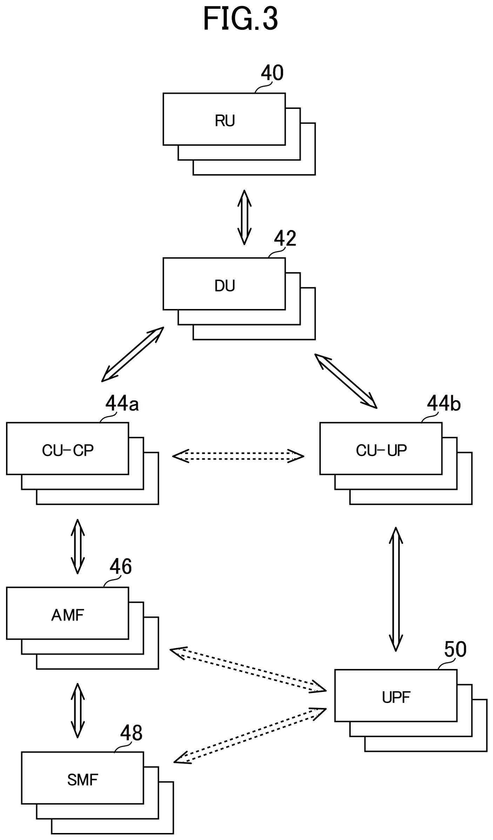

FIG. 3 is a diagram for schematically illustrating an example of an operating network service. The network service illustrated in FIG. 3 includes NFs, such as a plurality of RUs 40, a plurality of DUs 42, a plurality of CUs 44 (central unit-control planes (CU-CPs) 44a and central unit-user planes (CU-UPs) 44b), a plurality of access and mobility management functions (AMFs) 46, a plurality of session management functions (SMFs) 48, and a plurality of user plane functions (UPFs) 50, as software elements.

In the example of FIG. 3, the RUs 40, the DUs 42, the CU-CPs 44a, the AMFs 46, and the SMFs 48 correspond to elements of the control plane (C-plane), and the RUs 40, the DUs 42, the CU-UPs 44b, and the UPFs 50 correspond to elements of the user plane (U-plane).

The network service may include other types of NFs as software elements. In addition, the network service is implemented on a plurality of servers or other computer resources (hardware elements).

In this embodiment, for example, the network service illustrated in FIG. 3 provides a communication service in a certain area.

In this embodiment, it is also assumed that the plurality of RUs 40, the plurality of DUs 42, the plurality of CU-UPs 44b, and the plurality of UPFs 50, which are illustrated in FIG. 3, belong to one end-to-end network slice.

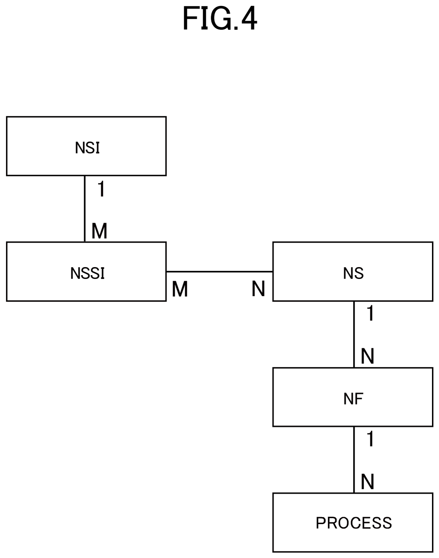

FIG. 4 is a diagram for schematically illustrating an example of links between elements constructed in the communication system 1 in this embodiment. Symbols M and N indicated in FIG. 4 each represent any integer of 1 or more, and each indicate a relationship between the numbers of elements connected by a link. When the link has a combination of M and N at both ends thereof, the elements connected by the link have a many-to-many relationship. When the link has a combination of 1 and N or a combination of 1 and M at both ends thereof, the elements connected by the link have a one-to-many relationship.

As illustrated in FIG. 4, a network service (NS), a network function (NF), and a process have a hierarchical structure.

The NS corresponds to, for example, a network service formed of a plurality of NFs. In this case, the NS may correspond to an element having a granularity, such as a 5GC, an EPC, a 5G RAN (gNB), or a 4G RAN (eNB).

In 5G, the NF corresponds to an element having a granularity, such as the RU, the DU, the CU-UP, the AMF, the SMF, or the UPF. In 4G, the NF corresponds to an element having a granularity, such as a mobility management entity (MME), a home subscriber server (HSS), a serving gateway (S-GW), a vDU, or a vCU. In this embodiment, for example, one NS includes one or a plurality of NFs. That is, one or a plurality of NFs are under the control of one NS.

The NF includes one or more processes. That is, one or more processes are under the control of one NF.

A certain process may provide a part of the functions among, for example, the DU, the CU-CP, and the CU-UP. Further, a certain process may provide a part of the functions among, for example, the UPF, the AMF, and the SMF. For example, the UPF may include a plurality of types of processes, such as a process for management and a process for communication on the user plane. Moreover, one NF (for example, one UPF) may include a plurality of processes of a specific type.

In addition, as illustrated in FIG. 4, a network slice (NSI) and a network slice subnet instance (NSSI) have a hierarchical structure.

The NSIs can be said to be end-to-end virtual circuits that span a plurality of domains (for example, from the RAN 32 to the core network system 34). Each NSI may be a slice for high-speed and high-capacity communication (for example, for enhanced mobile broadband (eMBB)), a slice for high-reliability and low-latency communication (for example, for ultra-reliable and low latency communications (URLLC)), or a slice for connecting a large quantity of terminals (for example, for massive machine type communication (mMTC)). The NSSIs can be said to be single domain virtual circuits dividing an NSI. Each NSSI may be a slice of a RAN domain, a slice of a transport domain such as a mobile back haul (MBH) domain, or a slice of a core network domain.

In this embodiment, for example, one NSI includes one or a plurality of NSSIs. That is, one or a plurality of NSSIs are under the control of one NSI. In this embodiment, a plurality of NSIs may share the same NSSI.

In addition, as illustrated in FIG. 4, the NSSI and the NS generally have a many-to-many relationship.

In addition, in this embodiment, for example, one NF can belong to one or a plurality of network slices. Specifically, for example, network slice selection assistance information (NSSAI) including one or a plurality of pieces of sub-network slice selection assist information (S-NSSAI) can be set for one NF. In this case, the S-NSSAI is information associated with the network slice. The NF is not required to belong to the network slice.

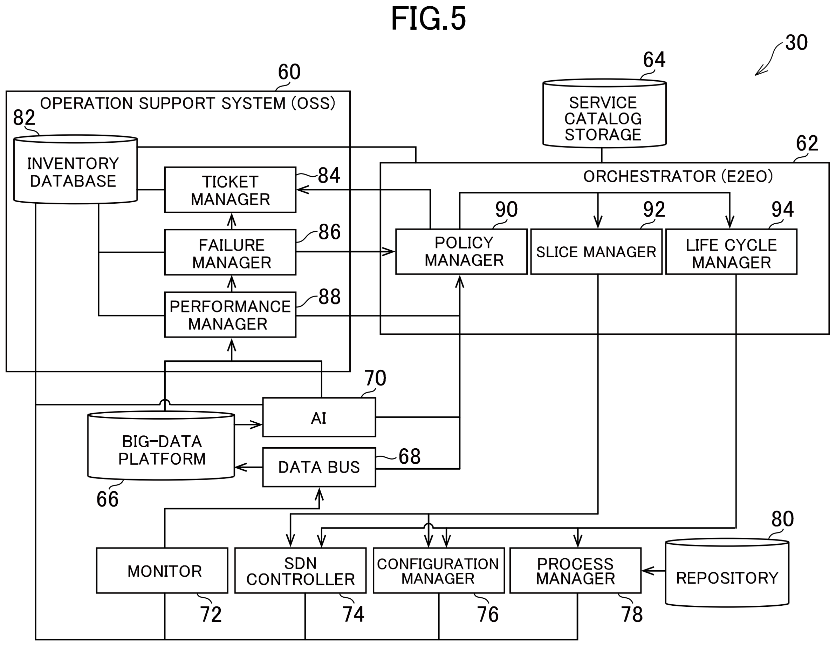

FIG. 5 is a functional block diagram for illustrating an example of functions implemented by the platform system 30 in this embodiment. The platform system 30 in this embodiment is not required to implement all the functions illustrated in FIG. 5, and may implement functions other than those illustrated in FIG. 5.

As illustrated in FIG. 5, the platform system 30 in this embodiment functionally includes, for example, an operation support system (OSS) 60, an orchestrator (end-to-end-orchestrator (E2EO)) 62, a service catalog storage 64, a big-data platform 66, a data bus 68, an artificial intelligence (AI) 70, a monitor 72, an SDN controller 74, a configuration manager 76, a process manager 78, and a repository 80. The OSS 60 includes an inventory database 82, a ticket manager 84, a failure manager 86, and a performance manager 88. The E2EO 62 includes a policy manager 90, a slice manager 92, and a life cycle manager 94. Those elements are implemented mainly by the processor 30a, the storage device 30b and the communication device 30c.

The functions illustrated in FIG. 5 may be implemented by executing, by the processor 30a, a program that is installed in the platform system 30, which is one or a plurality of computers, and that includes instructions corresponding to the functions. The program may be supplied to the platform system 30 via a computer-readable information storage medium, such as an optical disc, a magnetic disk, a magnetic tape, a magneto-optical disc, a flash memory, or the like, or via the Internet or the like. The functions illustrated in FIG. 5 may also be implemented by a circuit block, a memory, and other LSIs. Further, a person skilled in the art would understand that the functions illustrated in FIG. 5 can be implemented in various forms by only hardware, by only software, or by a combination of hardware and software.

The process manager 78 executes life cycle management of a process. For example, the life cycle management includes processes relating to the construction of the process such as the deployment and setting of the process.

In this case, the platform system 30 in this embodiment may include a plurality of process managers 78. In each of the plurality of process managers 78, a process management tool may be installed. Each of the plurality of process managers 78 may execute the construction of a process such as the deployment of the process for a server group (for example, cluster) associated with the process manager 78.

The process manager 78 is not required to be included in the platform system 30. The process manager 78 may be provided in, for example, a server (that is, the RAN 32 or the core network system 34) managed by the process manager 78, or another server that is annexed to the server managed by the process manager 78.

In this embodiment, the repository 80 stores, for example, an image of a process included in a functional unit group (for example, NF group) that implements a network service.

The inventory database 82 is a database in which inventory information is stored. The inventory information includes, for example, information on a server arranged in the RAN 32 or the core network system 34 and managed by the platform system 30.

Further, in this embodiment, the inventory database 82 stores inventory data. The inventory data indicates the current statuses of the configuration of an element group included in the communication system 1 and the link between the elements. In addition, the inventory data indicates the status of resources managed by the platform system 30 (for example, resource usage status). The inventory data may be physical inventory data or may be logical inventory data. The physical inventory data and the logical inventory data are described later.

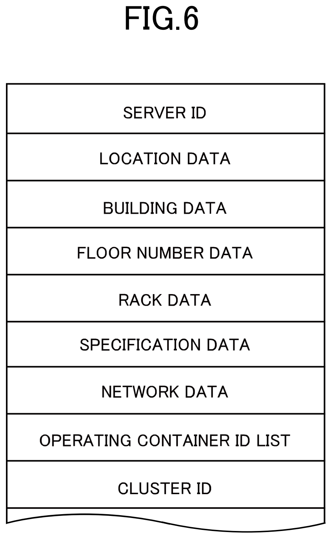

FIG. 6 is a diagram for illustrating an example of the data structure of the physical inventory data. The physical inventory data illustrated in FIG. 6 is associated with one server. The physical inventory data illustrated in FIG. 6 includes, for example, a server ID, location data, building data, floor number data, rack data, specification data, network data, an operating process ID list, and a cluster ID.

The server ID included in the physical inventory data is, for example, an identifier of the server associated with the physical inventory data.

The location data included in the physical inventory data is, for example, data indicating the location of the server (for example, the address of the location) associated with the physical inventory data.

The building data included in the physical inventory data is, for example, data indicating a building (for example, a building name) in which the server associated with the physical inventory data is arranged.

The floor number data included in the physical inventory data is, for example, data indicating a floor number at which the server associated with the physical inventory data is arranged.

The rack data included in the physical inventory data is, for example, an identifier of a rack in which the server associated with the physical inventory data is arranged.

The specification data included in the physical inventory data is, for example, data indicating the specifications of the server associated with the physical inventory data. The specification data indicates, for example, the number of cores, the memory capacity, and the hard disk capacity.

The network data included in the physical inventory data is, for example, data indicating information relating to a network of the server associated with the physical inventory data. The network data indicates, for example, an NIC included in the server, the number of ports included in the NIC, and a port ID of each of the ports.

The operating process ID list included in the physical inventory data is, for example, data indicating information relating to one or a plurality of processes operating on the server associated with the physical inventory data. The operating process ID list indicates, for example, a list of identifiers (process IDs) of instances of the processes.

The cluster ID included in the physical inventory data is, for example, an identifier of a cluster (for example, Kubernetes cluster) to which the server associated with the physical inventory data belongs.

The logical inventory data includes topology data for a plurality of elements included in the communication system 1, which indicates the current status of such link between the elements as illustrated in FIG. 4. For example, the logical inventory data includes topology data including an identifier of a certain NS and an identifier of one or a plurality of NFs under the control of the certain NS. In addition, for example, the logical inventory data includes topology data including an identifier of a certain network slice and an identifier of one or a plurality of NFs belonging to the certain network slice.

The inventory data may also include data indicated by the current status of, for example, a geographical relationship or a topological relationship between the elements included in the communication system 1. As described above, the inventory data includes location data indicating locations at which the elements included in the communication system 1 are operating, that is, the current locations of the elements included in the communication system 1. It can be said therefrom that the inventory data indicates the current status of the geographical relationship between the elements (for example, geographical closeness between the elements).

The logical inventory data may also include NSI data indicating information relating to a network slice. The NSI data indicates, for example, attributes such as an identifier of an instance of the network slice and the type of the network slice. The logical inventory data may also include NSSI data indicating information relating to a network slice subnet. The NSSI data indicates, for example, attributes such as an identifier of an instance of the network slice subnet and the type of the network slice subnet.

The logical inventory data may also include NS data indicating information relating to an NS. The NS data indicates, for example, attributes such as an identifier of an instance of the NS and the type of the NS. The logical inventory data may also include NF data indicating information relating to an NF. The NF data indicates, for example, attributes such as an identifier of an instance of the NF and the type of the NF. The logical inventory data may also include process data indicating information relating to a process included in the NF. The process data indicates, for example, attributes such as a process ID of an instance of the process and the type of the process.

With the process ID of the process data included in the logical inventory data and the process ID included in the operating process ID list included in the physical inventory data, an instance of the process and the server on which the instance of the process is operating become linked to each other.

Further, data indicating various attributes such as the host name and the IP address may be included in the above-mentioned data included in the logical inventory data. For example, the process data may include data indicating the IP address of a process corresponding to the process data. Further, for example, the NF data may include data indicating the IP address and the host name of an NF indicated by the NF data.

The logical inventory data may also include data indicating NSSAI including one or a plurality of pieces of S-NSSAI, which is set for each NF.

Further, the inventory database 82 can appropriately grasp the resource status in cooperation with the process manager 78. Then, the inventory database 82 appropriately updates the inventory data stored in the inventory database 82 based on the latest resource status.

Further, for example, the inventory database 82 updates the inventory data stored in the inventory database 82 in accordance with execution of an action, such as construction of a new element included in the communication system 1, a change of a configuration of the elements included in the communication system 1, scaling of the elements included in the communication system 1, or replacement of the elements included in the communication system 1.

The service catalog storage 64 stores service catalog data. The service catalog data may include, for example, service template data indicating the logic to be used by the life cycle manager 94 or the like. The service template data includes information required for constructing the network service. For example, the service template data includes information defining the NS, the NF, and the process and information indicating an NS-NF-process correspondence relationship. Further, for example, the service template data contains a workflow script for constructing the network service.

An NS descriptor (NSD) is an example of the service template data. The NSD is associated with a network service, and indicates, for example, the types of a plurality of functional units included in the network service. The NSD may indicate the number of functional units included in the network service for each type thereof. The NSD may also indicate a file name of an NFD described later, which relates to the NF included in the network service.

Further, an NF descriptor (NFD) is an example of the above-mentioned service template data. The NFD may indicate computer resources (for example, CPU, memory, and hard disk drive) required by the NF. For example, the NFD may also indicate, for each of a plurality of processes included in the NF, computer resources (such as CPU, memory, and hard disk drive) required by the process.

The service catalog data may also include information to be used by the policy manager 90, the information relating to a threshold value (for example, threshold value for abnormality detection) to be compared to the calculated performance index value and the calculated stability evaluation value. The performance index value and the stability evaluation value are described later.

The service catalog data may also include, for example, slice template data. The slice template data includes information required for executing instantiation of the network slice, and includes, for example, the logic to be used by the slice manager 92.

The slice template data includes information on a "generic network slice template" defined by the GSM Association (GSMA) ("GSM" is a trademark). Specifically, the slice template data includes network slice template data (NST), network slice subnet template data (NSST), and network service template data. The slice template data also includes information indicating the hierarchical structure of those elements which is illustrated in FIG. 4.

In this embodiment, for example, the life cycle manager 94 constructs a new network service for which a purchase request has been made in response to the purchase request for the NS by the purchaser.

The life cycle manager 94 may execute, for example, the workflow script associated with the network service to be purchased in response to the purchase request. Then, the life cycle manager 94 may execute the workflow script, to thereby instruct the process manager 78 to deploy the process included in the new network service to be purchased. Then, the process manager 78 may acquire an image of the process from the repository 80 and deploy a process corresponding to the image in the server.

In addition, in this embodiment, the life cycle manager 94 executes, for example, scaling or replacement of the element included in the communication system 1. In this case, the life cycle manager 94 may output a process deployment instruction or deletion instruction to the process manager 78. Then, the process manager 78 may execute, for example, a process of deploying a process or a process of deleting a process in accordance with the instruction. In this embodiment, the life cycle manager 94 can execute such scaling and replacement that cannot be handled by tools of the process manager 78.

The life cycle manager 94 may also output an instruction to create a communication route to the SDN controller 74. For example, the life cycle manager 94 presents, to the SDN controller 74, two IP addresses at both ends of a communication route to be created, and the SDN controller 74 creates a communication route connecting those two IP addresses to each other. The created communication route may be managed so as to be linked to those two IP addresses.

The life cycle manager 94 may also output to the SDN controller 74 an instruction to create a communication route between two IP addresses linked to the two IP addresses.

In this embodiment, the slice manager 92 executes, for example, instantiation of a network slice. In this embodiment, the slice manager 92 executes, for example, instantiation of a network slice by executing the logic indicated by the slice template stored in the service catalog storage 64.

The slice manager 92 includes, for example, a network slice management function (NSMF) and a network slice sub-network management function (NSSMF) described in the third generation partnership project (3GPP) (trademark) specification "TS28 533." The NSMF is a function for generating and managing network slices, and provides an NSI management service. The NSSMF is a function for generating and managing network slice subnets forming a part of a network slice, and provides an NSSI management service.

The slice manager 92 may output to the configuration manager 76 a configuration management instruction related to the instantiation of the network slice. Then, the configuration manager 76 may execute configuration management such as settings in accordance with the configuration management instruction.

The slice manager 92 may also present, to the SDN controller 74, two IP addresses to output an instruction to create a communication route between those two IP addresses.

In this embodiment, for example, the configuration manager 76 executes configuration management such as settings of the element group including the NFs in accordance with the configuration management instruction received from the life cycle manager 94 or the slice manager 92.

In this embodiment, for example, the SDN controller 74 creates the communication route between the two IP addresses linked to the creation instruction in accordance with the instruction to create the communication route, which has been received from the life cycle manager 94 or the slice manager 92. The SDN controller 74 may create a communication route between two IP addresses through use of, for example, a publicly known path calculation method such as Flex Algo.

In this case, for example, the SDN controller 74 may use segment routing technology (for example, segment routing IPv6 (SRv6)) to construct an NSI and NSSI for the server or an aggregation router present between communication routes. The SDN controller 74 may also generate an NSI and NSSI extending over a plurality of NFs to be set by issuing, to the plurality of NFs to be set, a command to set a common virtual local area network (VLAN) and a command to assign a bandwidth and a priority indicated by the setting information to the VLAN.

The SDN controller 74 may change the maximum value of the bandwidth that can be used for communication between two IP addresses without constructing a network slice.

The platform system 30 in this embodiment may include a plurality of SDN controllers 74. Each of the plurality of SDN controllers 74 may execute a process such as the creation of a communication route for a network device group including the AGs associated with the SDN controller 74.

In this embodiment, the monitor 72 monitors, for example, the element group included in the communication system 1 based on a given management policy. In this case, for example, the monitor 72 may monitor the element group based on a monitoring policy designated by the purchaser when the purchaser purchases the network service.

In this embodiment, the monitor 72 executes monitoring at various levels, such as a slice level, an NS level, an NF level, a process level, and a level of hardware such as the server.

For example, the monitor 72 may set a module for outputting metric data in the hardware such as the server, or a software element included in the communication system 1 so that monitoring can be performed at the various levels described above. In this case, for example, the NF may output the metric data indicating a metric that can be measured (can be identified) by the NF to the monitor 72. Further, the server may output the metric data indicating a metric relating to the hardware that can be measured (can be identified) by the server to the monitor 72.

In addition, for example, the monitor 72 may deploy, in the server, a sidecar process of acquiring the metric data in process units. The monitor 72 may repeatedly execute a process of acquiring the metric data acquired in process units from the sidecar process, at predetermined monitoring intervals through use of a mechanism of a monitoring tool.

The monitor 72 may monitor performance index values regarding performance indices described in, for example, "TS 28.552, Management and orchestration; 5G performance measurements" or "TS 28.554, Management and orchestration; 5G end to end Key Performance Indicators (KPI)." Then, the monitor 72 may acquire metric data indicating the performance index values to be monitored.

In this embodiment, for example, the monitor 72 executes a process (enrichment) for aggregating metric data in predetermined units of aggregation to generate performance index value data indicating the performance index values of the elements included in the communication system 1 in the units of aggregation.

For example, for one gNB, the metric data indicating the metrics of the elements under control of the gNB (for example, network nodes such as DUs 42 and CUs 44) is aggregated to generate the performance index value data of the gNB. In this way, performance index value data indicating a communication performance in the area covered by the gNB is generated. For example, performance index value data indicating a plurality of types of communication performance, such as traffic amount (throughput) and latency, may be generated in each gNB. However, the communication performance indicated by the performance index value data is not limited to traffic amount and latency.

The monitor 72 outputs the performance index value data generated by the above-mentioned enrichment to the data bus 68.

In this embodiment, for example, the data bus 68 receives the performance index value data output from the monitor 72. Based on the received one or a plurality of pieces of performance index value data, the data bus 68 generates a performance index value file including the one or a plurality of pieces of performance index value data. The data bus 68 then outputs the generated performance index value file to the big-data platform 66.

In this embodiment, for example, the monitor 72 identifies a stability evaluation value indicating the stability of the elements included in the communication system 1. The monitor 72 then generates stability evaluation value data indicating the identified stability evaluation value. The monitor 72 then outputs the generated stability evaluation value data to the data bus 68.

In this embodiment, for example, the data bus 68 receives the stability evaluation value data output from the monitor 72.

Further, the elements such as the network slice, the NS, the NF, the process that are included in the communication system 1 and the hardware such as the server notify the monitor 72 of various alerts (for example, notify the monitor 72 of an alert with the occurrence of a failure as a trigger).

Then, for example, when the monitor 72 receives the above-mentioned notification of the alert, the monitor 72 outputs alert message data indicating the notification to the data bus 68. Then, the data bus 68 generates an alert file in which alert message data indicating one or a plurality of notifications are compiled into one file, and outputs the generated alert file to the big-data platform 66.

In this embodiment, the big-data platform 66 accumulates, for example, the performance index value file and the alert file that have been output from the data bus 68.

In this embodiment, for example, a plurality of trained machine learning models are stored in the AI 70 in advance. The AI 70 uses various machine learning models stored in the AI 70 to execute an estimation process such as a future prediction process for a use status and quality of service of the communication system 1. The AI 70 may generate estimation result data indicating results of the estimation process.

The AI 70 may execute the estimation process based on the files accumulated in the big-data platform 66 and the above-mentioned machine learning model. The estimation process is suitable when prediction of a long-term trend is performed infrequently.

Further, the AI 70 can acquire performance index value data stored in the data bus 68. The AI 70 may execute the estimation process based on the performance index value data stored in the data bus 68 and the above-mentioned machine learning model. The estimation process is suitable when short-term predictions are performed frequently.

In this embodiment, for example, the performance manager 88 calculates, based on a plurality of pieces of metric data, a performance index value (for example, KPI) that is based on metrics indicated by those pieces of metric data. The performance manager 88 may calculate a performance index value (for example, performance index value relating to an end-to-end network slice) which is a comprehensive evaluation of a plurality of types of metrics and cannot be calculated from a single piece of metric data. The performance manager 88 may generate comprehensive performance index value data indicating a performance index value being a comprehensive evaluation.

The performance manager 88 may acquire the above-mentioned performance index value file from the big-data platform 66. Further, the performance manager 88 may acquire estimation result data from the AI 70. A performance index value such as a KPI may be calculated based on at least one of the performance index value file or the estimation result data. The performance manager 88 may directly acquire metric data from the monitor 72. Further, the performance index value such as a KPI may be calculated based on the metric data.

In this embodiment, the failure manager 86 detects the occurrence of a failure in the communication system 1 based on, for example, at least any one of the above-mentioned metric data, the above-mentioned notification of the alert, the above-mentioned estimation result data, or the above-mentioned comprehensive performance index value data. The failure manager 86 may detect, for example, the occurrence of a failure that cannot be detected from a single piece of metric data or a single notification of the alert, based on a predetermined logic. The failure manager 86 may also generate detection failure data indicating the detected failure.

The failure manager 86 may directly acquire the metric data and the notification of the alert from the monitor 72. The failure manager 86 may also acquire the performance index value file and the alert file from the big-data platform 66. Further, the failure manager 86 may acquire the alert message data from data bus 68.

In this embodiment, the policy manager 90 executes a predetermined determination process based on, for example, at least any one of the above-mentioned metric data, the above-mentioned performance index value data, the above-mentioned stability evaluation value data, the above-mentioned alert message data, the above-mentioned performance index value file, the above-mentioned alert file, the above-mentioned estimation result data, the above-mentioned comprehensive performance index value data, or the above-mentioned detection failure data.

Then, the policy manager 90 may execute an action corresponding to a result of the determination process. For example, the policy manager 90 may output an instruction to construct a network slice to the slice manager 92. The policy manager 90 may also output an instruction for scaling or replacement of the elements to the life cycle manager 94 based on the result of the determination process.

The policy manager 90 in this embodiment can acquire the performance index value data stored in the data bus 68. The policy manager 90 may then execute a predetermined determination process based on the performance index value data acquired from the data bus 68. The policy manager 90 may also execute a predetermined determination process based on the alert message data stored in the data bus 68.

Further, the policy manager 90 in this embodiment can acquire the stability evaluation value data stored in the data bus 68. The policy manager 90 may then execute a predetermined determination process based on the stability evaluation value data acquired from the data bus 68. For example, the policy manager 90 may determine whether or not an application is unstable based on the stability evaluation value data indicating the stability of the application.

In this embodiment, the ticket manager 84 generates, for example, a ticket indicating information to be notified to an administrator of the communication system 1. The ticket manager 84 may generate a ticket indicating details of the detection failure data. The ticket manager 84 may also generate a ticket indicating a value of the performance index value data, the stability evaluation value data, or the metric data. The ticket manager 84 may also generate a ticket indicating a determination result obtained by the policy manager 90.

Then, the ticket manager 84 notifies the administrator of the communication system 1 of the generated ticket. The ticket manager 84 may send, for example, an email to which the generated ticket is attached to an email address of the administrator of the communication system 1.

The platform system 30 in this embodiment determines whether or not the processes included in the communication system 1 are unstable. The determination of whether or not the processes are unstable, which is executed by the platform system 30 in this embodiment, is now further described.

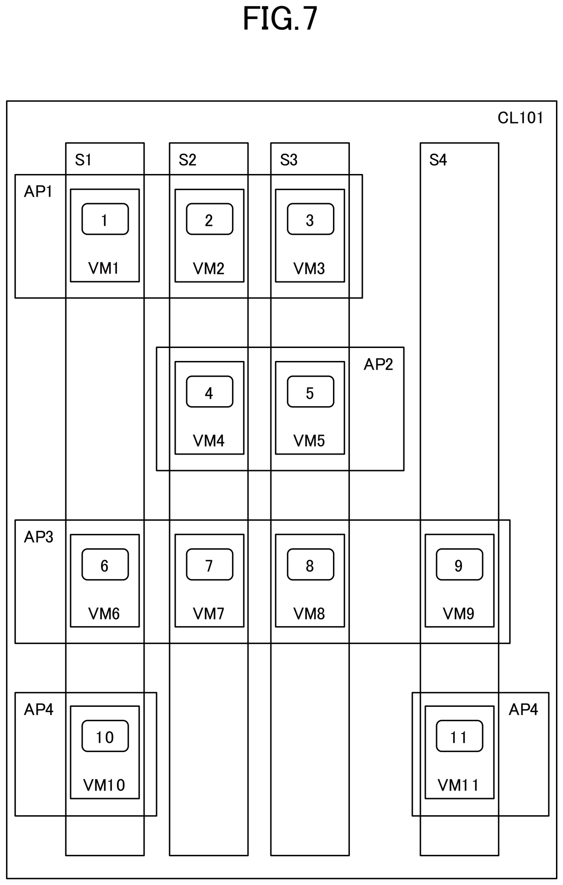

FIG. 7 is a diagram for schematically illustrating an example of a situation in which processes included in each of a plurality of applications are dispersedly operating on a plurality of virtual machines.

In the example of FIG. 7, a situation in which four applications having the identifiers AP1, AP2, AP3, and AP4, respectively, are operating is illustrated.

Those applications may be network functions (for example, DU 42, CU-CP 44a, CU-UP 44b, AMF 46, SMF 48, and UPF 50).

In this embodiment, for each type of application, the hardware resources on which the type of application can operate are determined in advance. In the following description, the hardware resources are assumed to be servers, but it is not required that the hardware resources be servers, and the hardware resources may be, for example, nodes.

The hardware resources on which a certain type of application can operate are hereinafter referred to as "tenant" corresponding to the application.

In FIG. 7, four servers having the identifiers S1, S2, S3, and S4, respectively, are illustrated. Those four servers belong to one cluster having the identifier CL101.

Further, the four applications illustrated in FIG. 7 are each of a different type. It is assumed that the tenants corresponding to the application having the identifier AP1 include servers having the identifiers S1, S2, and S3. It is also assumed that the tenants corresponding to the application having the identifier AP2 include servers having the identifiers S2 and S3. It is also assumed that the tenants corresponding to the application having the identifier AP3 include servers having the identifiers S1, S2, S3, and S4. It is also assumed that the tenants corresponding to the application having the identifier AP4 include servers having the identifiers S1 and S4.

It is also assumed that virtual machines having the identifiers VM1, VM6, and VM10 are operating on the server having the identifier S1, virtual machines having the identifiers VM2, VM4, and VM7 are operating on the server having the identifier S2, virtual machines having the identifiers VM3, VM5, and VM8 are operating on the server having the identifier S3, and virtual machines having the identifiers VM9 and VM11 are operating on the server having the identifier S4.

Each rounded rectangular shape illustrated in FIG. 7 corresponds to one process. The numbers illustrated in the rounded rectangle shapes are the identifiers associated with the type of the process.

As illustrated in FIG. 7, the application having the identifier AP1 includes one process for each of three types of processes having the identifiers 1, 2, and 3. Further, the types of processes having the identifiers 1, 2, and 3 are operating on the virtual machines having the identifiers VM1, VM2, and VM3, respectively.

The application having the identifier AP2 includes one process for each of two types of processes having the identifiers 4 and 5. The types of processes having the identifiers 4 and 5 are operating on the virtual machines having the identifiers VM4 and VM5, respectively.

The application having the identifier AP3 includes one process for each of four types of processes having the identifiers 6, 7, 8, and 9. The types of processes having the identifiers 6, 7, 8, and 9 are operating on the virtual machines having the identifiers VM6, VM7, VM8, and VM9, respectively.

The application having the identifier AP4 includes one process for each of two types of processes having the identifiers 10 and 11. The types of processes having the identifiers 10 and 11 are operating on the virtual machines having the identifiers VM10 and VM11, respectively.

Thus, the applications illustrated in FIG. 7 include a plurality of processes. Those processes are dispersedly operating on a plurality of virtual machines.

In the example of FIG. 7, one application includes one process for each of a plurality of types of processes, but one application may include a plurality processes for one type of process. Further, in the example of FIG. 7, one process is operating on one virtual machine, but a plurality of processes may be operating on one virtual machine.

In this embodiment, for example, the monitor 72 acquires, for each process, a value (metric) indicating the stability of the process. For example, metrics such as a value indicating the status of the process (for example, alive or dead), a time at which the process started, a length of time for which the process has executed input and output, the number of transmitted packets dropped by the process, and the number of received packets dropped by the process may be acquired.

Then, the monitor 72 calculates a weighted sum of the acquired plurality of types of metrics based on a weighting associated with those types as the stability evaluation value indicating the stability of the process. In this case, for example, the weighting of each type of metric may be determined in advance for each type of process. Further, a weighted sum of the acquired metrics based on a weighting determined in advance may be calculated as the stability evaluation value indicating the stability of the type of process. The stability evaluation value indicating the stability of a process is hereinafter referred to as "process stability evaluation value." For example, in the example of FIG. 7, the process stability evaluation value is calculated for each of the processes having the identifiers 1 to 11.

Then, the monitor 72 identifies the stability evaluation value indicating the stability of the application based on a process stability evaluation value, which is acquired for each process included in the application, relating to the process. The stability evaluation value indicating the stability of the application is hereinafter referred to as "application stability evaluation value." For example, for each application, the monitor 72 calculates the application stability evaluation value of the application based on the process stability evaluation values calculated for the processes included in the application.

The application stability evaluation value may be identified based on at least one of a status of the processes included in the application, a lifetime of the processes included in the application, a length of time for which the processes included in the application have executed input and output, or the number of packets dropped by the processes included in the application. The lifetime of a process is identifiable based on a value indicating the start time of the process, for example.

The monitor 72 may calculate the application stability evaluation value indicating the stability of an application in accordance with a rule associated with the type of the application. For example, a mathematical expression may be predetermined for each type of application. Further, the application stability evaluation value of the application may be calculated by applying the process stability evaluation value, which is acquired for each type of process included in the application, relating to the type of process to the mathematical expression.

For example, the application stability evaluation value of the application having the identifier AP1 is calculated based on the process stability evaluation values of the types of processes having the identifiers 1 to 3. Further, the application stability evaluation value of the application having the identifier AP2 is calculated based on the process stability evaluation values of the types of processes having the identifiers 4 and 5. In addition, the application stability evaluation value of the application having the identifier AP3 is calculated based on the process stability evaluation values of the types of processes having the identifiers 6 to 9. Moreover, the application stability evaluation value of the application having the identifier AP4 is calculated based on the process stability evaluation values of the types of processes having the identifiers 10 and 11.

Then, the monitor 72 identifies the stability evaluation value indicating the stability of the cluster based on an application stability evaluation value of each application which is calculated for each application. The stability evaluation value indicating the stability of the cluster is hereinafter referred to as "cluster stability evaluation value." For example, for each cluster, the monitor 72 calculates the cluster stability evaluation value of the cluster based on the process stability evaluation values calculated for the applications operating in the cluster.

The monitor 72 may calculate the cluster stability evaluation value in accordance with a predetermined rule. For example, a weighting may be predetermined in advance for each type of application. Further, a weighted sum of the application stability evaluation values of the applications operating in the cluster may be calculated as the cluster stability evaluation value of the cluster.

For example, the cluster stability evaluation value of the cluster having the identifier CL101 is calculated based on the application stability evaluation values of the applications having the identifiers AP1 to AP4.

Then, for each of a plurality of clusters, the monitor 72 generates cluster stability evaluation value data indicating the cluster stability evaluation value calculated for the cluster, and outputs the generated cluster stability evaluation value data to the data bus 68. In this embodiment, for example, the monitor 72 generates the cluster stability evaluation value data representing the most recent situation at predetermined time intervals. The monitor 72 outputs the cluster stability evaluation value data to the data bus 68 each time the cluster stability evaluation value data is generated.

When the cluster stability evaluation value data is output to the data bus 68, the policy manager 90 acquires the cluster stability evaluation value data. The policy manager 90 then identifies the cluster stability evaluation value indicated by the acquired cluster stability evaluation value data.

The policy manager 90 then determines, for each of the plurality of cluster, whether or not the cluster is unstable based on the cluster stability evaluation value indicating the stability of the cluster. For example, as the cluster becomes more unstable, the cluster stability evaluation value becomes smaller. In this case, the policy manager 90 determines that a cluster is unstable, for example, when the cluster stability evaluation value is smaller than a predetermined threshold value.

As described above, in this embodiment, the process of determining whether or not a cluster is unstable is executed each time the cluster stability evaluation value data of the cluster is output to the data bus 68. In this way, in this embodiment, the policy manager 90 monitors whether or not the clusters included in the communication system 1 have become unstable.

In this embodiment, for example, in response to detecting that the cluster has become unstable, the policy manager 90 starts monitoring whether or not each of the plurality of applications operating in the cluster has become unstable.

For example, in a case in which the policy manager 90 has determined that the cluster having the identifier CL101 is unstable, the policy manager 90 may output to the monitor 72 an instruction to start outputting stability evaluation value data indicating the application stability evaluation value for each of the plurality of applications operating in the cluster. The stability evaluation value data indicating the application stability evaluation values is hereinafter referred to as "application stability evaluation value data."

In this embodiment, for example, in response to receiving the instruction to start outputting, the monitor 72 starts generating application stability evaluation value data representing the most recent situation at predetermined time intervals for each of the plurality of applications (in this case, for example, the four applications having the identifiers AP1 to AP4) operating in the cluster. Further, the monitor 72 outputs the application stability evaluation value data to the data bus 68 each time the application stability evaluation value data is generated.

In this embodiment, for example, the policy manager 90 acquires the application stability evaluation value data in response to the application stability evaluation value data being output to the data bus 68.

In this embodiment, for example, the policy manager 90 determines whether or not the application is unstable based on the stability evaluation value indicated by the acquired application stability evaluation value data. For example, as the application becomes more unstable, the application stability evaluation value becomes smaller. In this case, the policy manager 90 determines that the application is unstable when, for example, the application stability evaluation value is less than a predetermined threshold value.

As described above, in this embodiment, the process of determining whether or not an application is unstable is executed each time the application stability evaluation value data of the application is output to the data bus 68. In this way, in this embodiment, the policy manager 90 monitors whether or not an application which is included in the communication system 1 and which includes processes that are dispersedly operating on a plurality of virtual machines has become unstable.

Further, as described above, in response to detecting that a cluster has become unstable, the policy manager 90 may start monitoring whether or not each of the plurality of applications operating in the cluster has become unstable.

Further, in this embodiment, the policy manager 90 may monitor a plurality of monitoring items relating to the application. Then, the policy manager 90 may determine, in response to detecting that the monitoring result of a given monitoring item among the plurality of monitoring items satisfies a predetermined condition, for each of the plurality of virtual machines on which at least one process included in the application is operating, whether or not the process operating on the virtual machine is unstable.

Further, in this embodiment, for example, the policy manager 90 may determine, in response to detecting that the application has become unstable, for each of the plurality of virtual machines on which at least one process included in the application is operating, whether or not the process operating on the virtual machine is unstable.

In this case, for example, the policy manager 90 may identify, in response to detecting that the application has become unstable, a plurality of virtual machines on which at least one process included in the application is operating. Then, the policy manager 90 may start monitoring, for each of the identified plurality of virtual machines, whether or not the process operating on the virtual machine is unstable.

For example, in a case in which the policy manager 90 has determined that the application having the identifier AP1 is unstable, the policy manager 90 may output to the monitor 72 an instruction to start outputting the stability evaluation value data indicating a process stability evaluation value for each of the plurality of processes included in the application. The stability evaluation value data indicating the process stability evaluation value is hereinafter referred to as "process stability evaluation value data."

In this embodiment, for example, in response to receiving the instruction to start outputting, the monitor 72 starts generating process stability evaluation value data representing the most recent situation at predetermined time intervals for each of the plurality of processes (in this case, for example, the three processes having the identifiers 1 to 3) included in the application. Further, the monitor 72 outputs the process stability evaluation value data to the data bus 68 each time the process stability evaluation value data is generated.

In this embodiment, for example, the policy manager 90 acquires the process stability evaluation value data in response to the process stability evaluation value data being output to the data bus 68.

In this embodiment, for example, the policy manager 90 determines whether or not the process is unstable based on the stability evaluation value indicated by the acquired process stability evaluation value data. For example, as the process becomes more unstable, the process stability evaluation value becomes smaller. In this case, the policy manager 90 determines that the process is unstable when, for example, the process stability evaluation value is less than a predetermined threshold value.

As described above, in this embodiment, the process of determining whether or not a process is unstable is executed each time the application stability evaluation value data of the process is output to the data bus 68. In this way, in this embodiment, the policy manager 90 monitors whether or not processes included in the communication system 1 have become unstable.

Further, as described above, in response to detecting that an application has become unstable, the policy manager 90 may start monitoring whether or not each of the plurality of processes included in the application has become unstable.

It is not required that the output of the application stability evaluation value data to the data bus 68 be started in response to determining that the cluster is unstable. For example, the policy manager 90 may request the monitor 72 to output the application stability evaluation value data indicating the latest application stability evaluation value for the applications operating in the cluster in response to determining that the cluster is unstable.

Then, in response to receiving the request, the monitor 72 may generate the application stability evaluation value data indicating the latest application stability evaluation value, and output the generated application stability evaluation value data to the policy manager 90. Then, the policy manager 90 may receive the application stability evaluation value data output from the monitor 72, and determine whether or not the application is unstable based on the application stability evaluation value indicated by the application stability evaluation value data.

Similarly, it is not required that the output of the process stability evaluation value data to the data bus 68 be started in response to determining that the application is unstable. For example, the policy manager 90 may request the monitor 72 to output the process stability evaluation value data indicating the latest process stability evaluation value for the processes included in the application in response to determining that the application is unstable.

Then, in response to receiving the request, the monitor 72 may generate the process stability evaluation value data indicating the latest process stability evaluation value, and output the generated process stability evaluation value data to the policy manager 90. Then, the policy manager 90 may receive the process stability evaluation value data output from the monitor 72, and determine whether or not the process is unstable based on the process stability evaluation value indicated by the process stability evaluation value data.

Further, in this embodiment, in response to determining that a process is unstable, the policy manager 90 may execute an action relating to the process. For example, the policy manager 90 may execute an action on, for example, the process, the virtual machine on which the process is operating, the server on which the virtual machine is operating, or the cluster in which the server is operating.

In this case, for example, in response to determining that the process is unstable, the policy manager 90 may determine whether or not a process which is operating on a hardware resource on which the process is operating and which is operating on a virtual machine different from the virtual machine on which the process is operating is unstable. Then, the policy manager 90 may execute an action corresponding to the determination result of whether or not the process operating on the different virtual machine is unstable.

For example, the policy manager 90 may replace the process. The policy manager 90 may also start up or shut down a virtual machine. The policy manager 90 may also separate a hardware resource from the cluster. The policy manager 90 may also change the tenant settings of the application.

For example, in response to determining that the process having the identifier 1 is unstable, it may be determined whether or not the processes having the identifiers 6 and 10 are unstable.

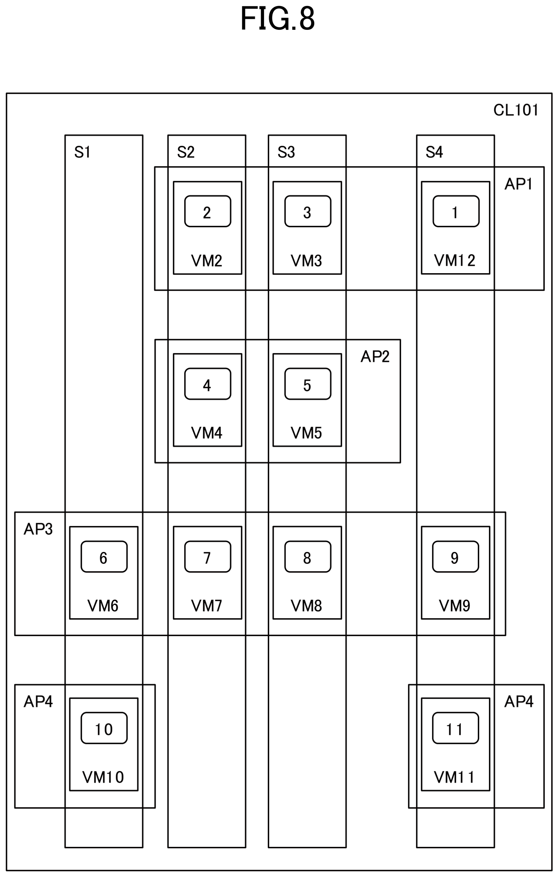

Then, for example, when at least one of the processes having the identifiers 6 and 10 is determined to be stable, as illustrated in FIG. 8, a new virtual machine having the identifier VM12 may be started on the server having the identifier S4. Then, the process having the identifier 1 may be replaced such that the process having the identifier 1 operates on the new virtual machine having the identifier VM12. Then, the virtual machine having the identifier VM1 may be shut down.

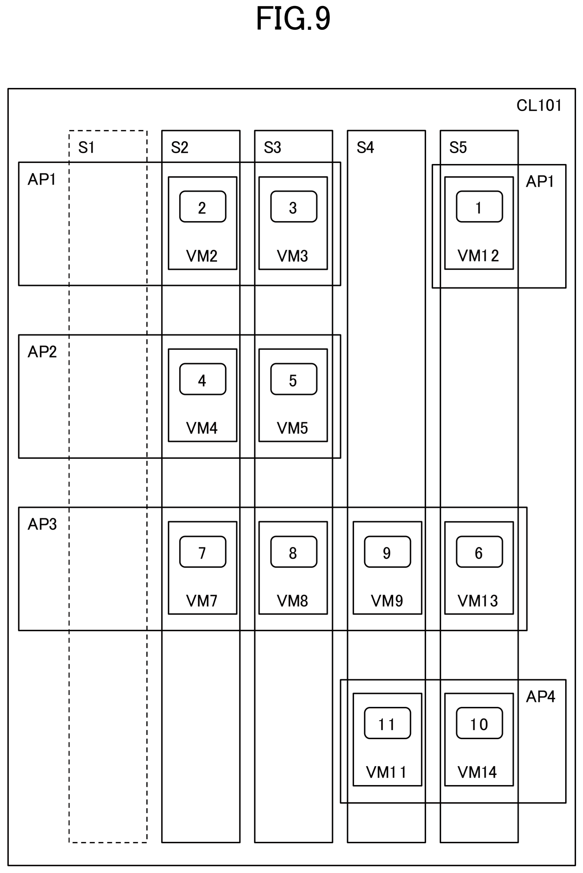

Meanwhile, when the processes having the identifiers 6 and 10 are both determined to be unstable, as illustrated in FIG. 9, the server having the identifier S5 may be added to the cluster having the identifier CL101. Then, new virtual machines having the identifiers VM12, VM13, and VM14 may be started on the server having the identifier S5. Then, the processes having the identifiers 1, 6, and 10 may be replaced such that the process having the identifier 1 operates on the new virtual machine having the identifier VM12, the process having the identifier 6 operates on the new virtual machine having the identifier VM13, and the process having the identifier 10 operates on the new virtual machine having the identifier VM14. Then, the server having the identifier S1 may be separated from the cluster having the identifier CL101.

Further, in this embodiment, there may be a case in which a plurality of processes are operating on one virtual machine. In this case, when all of those plurality of processes are determined to be unstable, all of those plurality of processes may be replaced and the virtual machine may be shut down. Meanwhile, when some of those plurality of processes are determined to be unstable, the processes determined to be unstable may be replaced. In this case, the remaining processes may continue to operate on the virtual machine without being replaced.

Further, in this embodiment, the conditions for determining that a cluster is unstable may be looser than the conditions for determining that an application is unstable.

For example, it is assumed that the cluster stability evaluation value becomes smaller as the cluster becomes more unstable, the application stability evaluation value becomes smaller as the application becomes more unstable, and the cluster stability evaluation value indicating the stability of the cluster is the total value of the application stability evaluation values indicating the stability of the applications operating in the cluster. It is further assumed that, when the cluster stability evaluation value is smaller than a predetermined threshold value th1, it is determined that the cluster is unstable, and when the application stability evaluation value is smaller than a predetermined threshold value th2, it is determined that the application is unstable.

In this case, when the number of applications operating in the cluster is n1, the threshold value th1 may be larger than n1 times the threshold value th2.

Conversely, the conditions for determining that an application is unstable may be looser than the conditions for determining that a cluster is unstable. For example, in the case described above, the threshold value th1 may be smaller than n1 times the threshold value th2.

Further, the conditions for determining that an application is unstable may be looser than the conditions for determining that a process is unstable.

For example, it is assumed that the application stability evaluation value becomes smaller when the application becomes more unstable, the process stability evaluation value becomes smaller when the process becomes more unstable, and the application stability evaluation value indicating the stability of the application is the total value of the process stability evaluation values indicating the stability of the processes included in the application. It is further assumed that, when the application stability evaluation value is smaller than a predetermined threshold value th3, it is determined that the application is unstable, and when the process stability evaluation value is smaller than a predetermined threshold value th4, it is determined that the process is unstable.

In this case, when the number of processes included in the application is n2, the threshold value th3 may be larger than n2 times the threshold value th4.

Conversely, the conditions for determining that a process is unstable may be looser than the conditions for determining that an application is unstable. For example, in the case described above, the threshold value th3 may be smaller than n2 times the threshold value th4.

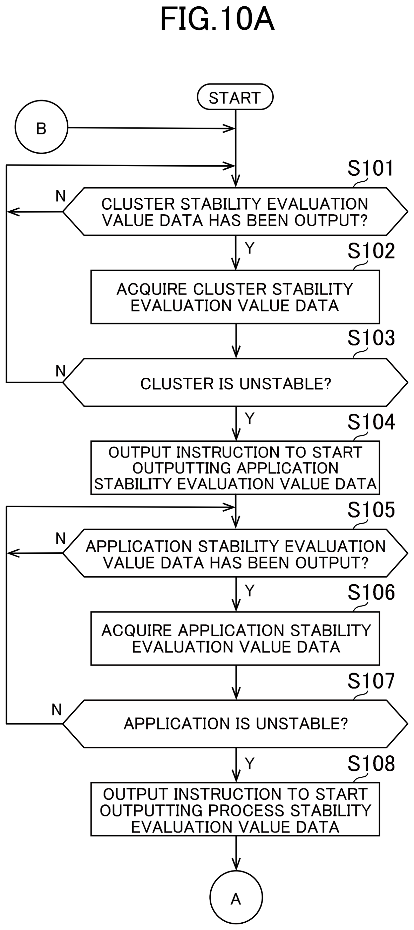

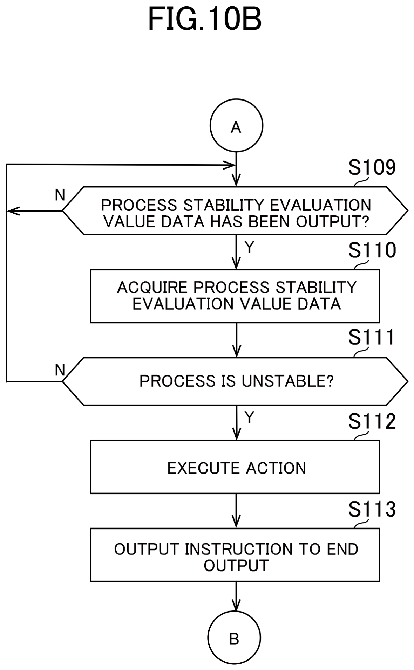

Next, an example of a flow of a process, which is performed by the platform system 30 in this embodiment, relating to determining whether or not a process is unstable is described with reference to the flow charts illustrated in FIG. 10A and FIG. 10B.

In this process example, for example, the process steps of from Step S101 to Step S113 described below are executed on each of a plurality of clusters included in the communication system 1. The following description focuses on one of those plurality of clusters, and describes an example of the flow of the process executed on the cluster.

In this process example, for example, the policy manager 90 monitors output of cluster stability evaluation value data indicating the stability of the cluster to the data bus 68 (Step S101).

When output of the cluster stability evaluation value data to the data bus 68 is detected, the policy manager 90 acquires the cluster stability evaluation value data (Step S102).

Then, the policy manager 90 determines whether or not the cluster is unstable based on the cluster stability evaluation value data acquired in the process step of Step S102 (Step S103).

When it is not determined that the cluster is unstable ("N" in Step S103), the process returns to the process step of Step S101.

When it is determined that the cluster is unstable ("Y" in Step S103), the policy manager 90 outputs to the monitor 72 an instruction to start outputting the application stability evaluation value data for each of the plurality of applications operating in the cluster (Step S104). Then, the monitor 72 starts outputting the application stability evaluation value data to the data bus 68.

Then, the policy manager 90 monitors, for each of the plurality of applications operating in the cluster, output of application stability evaluation value data indicating the stability of the application to the data bus 68 (Step S105).

When output of the application stability evaluation value data to the data bus 68 is detected, the policy manager 90 acquires the application stability evaluation value data (Step S106).

Then, the policy manager 90 determines whether or not the application is unstable based on the application stability evaluation value data acquired in the process step of Step S106 (Step S107).

When it is not determined that the application is unstable ("N" in Step S107), the process returns to the process step of Step S105.

When it is determined that the application is unstable ("Y" in Step S107), the policy manager 90 outputs to the monitor 72 an instruction to start outputting the process stability evaluation value data for each of the plurality of processes included in the application (Step S108). Then, the monitor 72 starts outputting the process stability evaluation value data to the data bus 68.

Then, the policy manager 90 monitors, for each of the plurality of processes included in the application, output of process stability evaluation value data indicating the stability of the process to the data bus 68 (Step S109).

When output of the process stability evaluation value data to the data bus 68 is detected, the policy manager 90 acquires the process stability evaluation value data (Step S110).

Then, the policy manager 90 determines whether or not the process is unstable based on the process stability evaluation value data acquired in the process step of Step S110 (Step S111).

When it is not determined that the application is unstable ("N" in Step S111), the process returns to the process step of Step S109.

When it is determined that the application is unstable ("Y" in Step S111), the policy manager 90 executes the action relating to the process (Step S112). In the process step of Step S112, for example, replacement of the process into another virtual machine is executed.

Then, the policy manager 90 outputs to the monitor 72 an instruction to end output (Step S113). The monitor 72 then ends the above-mentioned output of the application stability evaluation value data to the data bus 68 and the above-mentioned output of the process stability evaluation value data to the data bus 68. Then, the process returns to the process step of Step S101.

In this process example, the policy manager 90 may monitor output of the application stability evaluation value data to the data bus 68 while the process steps of from Step S109 to Step S113 are being executed as well. Then, in response to detecting that the application stability evaluation value data has been output to the data bus 68, the policy manager 90 may execute the process steps of Step S106 and thereafter for the application stability evaluation value data.

When an unstable process is extracted from among the processes included in the communication system 1, in a case in which each process is monitored to see whether or not the process has become unstable, the processing load for the monitoring may become enormous.

As described above, in this embodiment, until it is detected that an application has become unstable, the process of determining whether the processes included in the application are unstable is not executed.

Then, in response to detecting that the application has become unstable, for each of the plurality of virtual machines on which at least one process included in the application is operating, it is determined whether or not the process operating on the virtual machines is unstable.

Thus, in this embodiment, it is possible to extract an unstable process from among the processes included in the communication system 1 with a small processing load.

It should be noted that the present invention is not limited to the above-mentioned embodiment.

For example, the functional unit in this embodiment is not limited to those illustrated in FIG. 3.

Further, the functional unit in this embodiment is not required to be an NF in 5G. For example, the functional unit in this embodiment may be an eNodeB, a vDU, a vCU, a packet data network gateway (P-GW), a serving gateway (S-GW), a mobility management entity (MME), a home subscriber server (HSS), or another network node in 4G.

Further, the functional unit in this embodiment is not required to be implemented by software, and may be implemented by hardware such as an electronic circuit. Further, the functional unit in this embodiment may be implemented by a combination of an electronic circuit and software.

The technology disclosed in the present disclosure can also be expressed as follows.
[1] A determination system including: application monitoring means for monitoring whether an application which is included in a communication system and which includes processes that are dispersedly operating on a plurality of virtual machines has become unstable; and process instability determination means for determining, in response to detecting that the application has become unstable, for each of the plurality of virtual machines on which at least one process included in the application is operating, whether the at least one process operating on the each of the plurality of virtual machines is unstable.
[2] The determination system according to Item [1], wherein the application monitoring means monitors a plurality of monitoring items relating to the application, and wherein, in response to detecting that a result of the monitoring of a given monitoring item among the plurality of monitoring items satisfies a predetermined condition, the process instability determination means determines, for each of the plurality of virtual machines on which at least one process included in the application is operating, whether the at least one process operating on the each of the plurality of virtual machines is unstable.
[3] The determination system according to Item [1] or [2], further including cluster monitoring means for monitoring whether a cluster which is included in the communication system and in which a plurality of applications are operating has become unstable, and wherein, in response to detecting that the cluster has become unstable, the application monitoring means starts monitoring of whether each of the plurality of applications operating in the cluster has become unstable.
[4] The determination system according to any one of Items [1] to [3], further including action execution means for executing, in response to determining that the process is unstable, an action relating to the process.
[5] The determination system according to Item [4], wherein the process instability determination means determines, in response to determining that the process is unstable, whether a process which is operating on a hardware resource on which the process is operating and which is operating on a virtual machine different from a virtual machine on which the process is operating is unstable, and wherein the action execution means executes an action corresponding to a result of the determination of whether the process operating on the different virtual machine is unstable.
[6] The determination system according to any one of Items [1] to [5], wherein the application is a network function.
[7] A determination method including: monitoring whether an application which is included in a communication system and which includes processes that are dispersedly operating on a plurality of virtual machines has become unstable; and determining, in response to detecting that the application has become unstable, for each of the plurality of virtual machines on which at least one process included in the application is operating, whether the at least one process operating on the each of the plurality of virtual machines is unstable.

## Claims

1. A determination system, comprising one or more processors, the determination system causing at least one of the one or more processors to execute:
an application monitoring process of monitoring whether an application which is included in a communication system and which includes processes that are dispersedly operating on a plurality of virtual machines has become unstable; and
a process instability determination process of determining, in response to detecting that the application has become unstable, for each of the plurality of virtual machines on which at least one process included in the application is operating, whether the at least one process operating on the each of the plurality of virtual machines is unstable.

2. The determination system according to claim 1,
wherein, in the application monitoring process, a plurality of monitoring items relating to the application are monitored, and
wherein, in the process instability determination process, in response to detecting that a result of the monitoring of a given monitoring item among the plurality of monitoring items satisfies a predetermined condition, for each of the plurality of virtual machines on which at least one process included in the application is operating, it is determined whether the at least one process operating on the each of the plurality of virtual machines is unstable.

3. The determination system according to claim 1,
wherein the determination system causes the at least one of the one or more processors to execute a cluster monitoring process of monitoring whether a cluster which is included in the communication system and in which a plurality of applications are operating has become unstable, and
wherein, in the application monitoring process, in response to detecting that the cluster has become unstable, monitoring of whether each of the plurality of applications operating in the cluster has become unstable is started.

4. The determination system according to claim 1, wherein the determination system causes the at least one of the one or more processors to execute an action execution process of executing, in response to determining that the process is unstable, an action relating to the process.

5. The determination system according to claim 4,
wherein, in the process instability determination process, in response to determining that the process is unstable, it is determined whether a process which is operating on a hardware resource on which the process is operating and which is operating on a virtual machine different from a virtual machine on which the process is operating is unstable, and
wherein, in the action execution process, an action corresponding to a result of the determination of whether the process operating on the different virtual machine is unstable is executed.

6. The determination system according to claim 1, wherein the application is a network function.

7. A determination method, comprising:
monitoring whether an application which is included in a communication system and which includes processes that are dispersedly operating on a plurality of virtual machines has become unstable; and
determining, in response to detecting that the application has become unstable, for each of the plurality of virtual machines on which at least one process included in the application is operating, whether the at least one process operating on the each of the plurality of virtual machines is unstable.
